# EUROPEAN PATENT APPLICATION

(11) **EP 3 243 796 A1**
(43) Date of publication of application: **15.11.2017**
(21) Application number: 16169085.4
(22) Date of filing: 11.05.2016
(51) Int. Cl.: C01B 17/05, B01D 53/52, B01D 53/85, C02F 3/34

(54) **A PROCESS TO TREAT A HYDROGEN SULPHIDE AND CARBON DIOXIDE COMPRISING GAS**

(71) Applicant: Paqell B.V., 1031 HM Amsterdam (NL)
(72) Inventor: KLOK, Johannes Bernardus Maria, 1031 HM Amsterdam (NL); VAN HEERINGEN, Gijsbert Jan, 1031 HM Amsterdam (NL); DE RINK, Frederikus, 1031 HM Amsterdam (NL); VAN DIJK, Jan Henk, 1031 HM Amsterdam (NL)
(74) Representative: Cramwinckel, Michiel

(57) **Abstract**

The invention is directed to a process to treat a hydrogen sulphide and carbon dioxide comprising gas comprising the following steps. (a) contacting the hydrogen sulphide and carbon dioxide comprising gas with an aqueous alkaline solution further comprising regenerated sulphide-oxidising bacteria under anaerobic conditions and at a temperature of between 35 and 48°C thereby obtaining a loaded aqueous solution. (b) contacting the loaded aqueous solution with an oxidant to regenerate the sulphide-oxidising bacteria to obtain a liquid effluent comprising regenerated sulphide-oxidising bacteria. (c) separating elemental sulphur from the loaded aqueous solution of step (a) and/or from the liquid effluent of step (b).

## Description

The invention is directed to a process to treat a hydrogen sulphide and carbon dioxide comprising gas wherein the gas is contacted with an aqueous alkaline solution. The process further involves the use of sulphide-oxidising bacteria to convert thus dissolved bisulphide compounds to elemental sulphur.

Such a process is described in US2008/0190844. In the described process H₂S is absorbed at a preferred temperature of between 0 and 20 °C. The absorbed sulfides are converted to elemental Sulphur in a further reactor in Sulfur Biological Reactor.

A problem of the process of US2008/0190844 is that when the feed contains carbon dioxide next to hydrogen sulphide a large portion of the carbon dioxide will also be absorbed. If for example a sodium bicarbonate solution is used as absorbent part of the sodium bicarbonate will convert to carbonic acid. This in turn results in that fresh sodium bicarbonate will have to be added in a continuous process.

The object of the present invention is to provide a process to treat a hydrogen sulphide and carbon dioxide comprising gas wherein less compounds of the aqueous alkaline solution are consumed by reaction with carbon dioxide.

This object is achieved by the following process. A process to treat a hydrogen sulphide and carbon dioxide comprising gas comprising the following steps:
(a) contacting the hydrogen sulphide and carbon dioxide comprising gas with an aqueous alkaline solution further comprising sulphide-oxidising bacteria under anaerobic conditions and at a temperature of between 35 and 48 °C thereby obtaining a loaded aqueous solution comprising bisulphide compounds, sulphide-oxidising bacteria and elemental sulphur and a gas having a lower content of hydrogen sulphide,
(b) contacting the loaded aqueous solution with an oxidant to regenerate the sulphide-oxidising bacteria to obtain a liquid effluent comprising regenerated sulphide-oxidising bacteria, wherein the sulphide-oxidising bacteria as present in step (a) are comprised of regenerated sulphide-oxidising bacteria obtained in step (b), and
(c) separating elemental sulphur from the loaded aqueous solution of step (a) and/or from the liquid effluent of step (b).

Applicants found that when step (a) is performed at the claimed temperature range less carbon dioxide is absorbed while the absorption of hydrogen sulphide is high. This results in a process wherein less of the compounds of the aqueous alkaline solution are consumed in the process. This is surprising because the physical absorption of both carbon dioxide and hydro sulphide will decrease when the temperature is increased. Applicants now found that when the conditions of step (a) are applied the absorption of hydrogen sulphide actually increases while the absorption of carbon dioxide decreases.

A further advantage of the process is that the content of bisulphide in the loaded aqueous solution as obtained in step (a) may be higher than in previous processes without generating high amounts of thiosulphate as the by-product.

Furthermore the biologic formation of sulphate is significantly reduced and the selectivity towards elemental sulphur significantly increased with the process according to the invention. Without wishing to be bound to any theory, it is believed that the exposure of the sulphide-oxidising bacteria to bisulphide in the presence of elemental sulphur under anaerobic conditions in step (a) and the optional step (a1) as described below, results in the suppression of enzyme systems in the sulphide-oxidising bacteria that are involved in the conversion of bisulphide into sulphate in favor of enzyme systems involved in the selective oxidation of bisulphide and/or polysulphides into elemental sulphur.

Also the formation of thiosulphate due to chemical oxidation of bisulphide is significantly reduced compared to prior art biological sulphide-oxidising processes as no direct contact occurs between an aqueous solution high in bisulphides and molecular oxygen. Such a direct contact between a solution high in bisulphides and molecular oxygen does take place in the aforementioned prior art processes.

A further advantage of the process according to the invention is that due to the lower formation of undesired oxidation products such as sulphate and thiosulphate, the bleed stream that needs to be purged from the process to avoid a too large built-up of undesired compounds can be reduced and therewith a larger amount of sulphide-oxidising bacteria is maintained in the process and less make-up chemicals need to be added to the process.

The process may be performed as a continuous process, a batch process or as a semi-batch process. Preferably the process as here described is performed as a continuous process.

The hydrogen sulphide and carbon dioxide comprising gas may be any gas comprising such compounds. A gas comprising of substantially only hydrogen sulphide and carbon dioxide may be used. The hydrogen sulphide and carbon dioxide may also be in admixture with other gaseous hydrocarbons, such as for example methane, ethane, propane and/or higher boiling hydrocarbons. The process is also suited to process a gas which in addition also comprises mercaptans and/or other sulphur compounds, for example carbonyl sulphide. Such a gas may be natural gas, bio-gas, refinery off gas, synthesis gas, geothermal gas, landfill gas or acid gas obtained in an amine gas treating process.

The combined concentration of hydrogen sulphide and carbon dioxide in the gas may range from trace amounts to 100 vol%. The volume ratio of carbon dioxide and hydrogen sulphide in the gas may be between 1:1 and 1000:1,preferably between 5:1 and 200:1 and more preferably between 20:1 and 200:1.

In step (a) the hydrogen sulphide and carbon dioxide comprising gas is contacted with an aqueous alkaline solution further comprising sulphide-oxidising bacteria under anaerobic conditions and at a temperature of between 35 and 48 °C. A loaded aqueous solution comprising bisulphide compounds, sulphide-oxidising bacteria and elemental sulphur and a gas having a lower content of hydrogen sulphide is obtained. Such a process is also referred to as an absorption process and is typically performed in an absorption or contacting column where gas and liquid flow counter-currently. Suitably step (a) is performed in a vertical column wherein continuously the hydrogen sulphide comprising gas is fed to the column at a lower position of the column and the an aqueous solution comprising sulphide-oxidising bacteria is continuously fed to a higher position of the column such that a substantially upward flowing gaseous stream contacts a substantially downwards flowing stream. The column is further provided with an outlet for the loaded aqueous solution at its lower end and an outlet for treated gas at its upper end.

The aqueous alkaline solution may be any liquid alkaline absorbent known to be suitable for absorption of hydrogen sulphide. Examples of suitable liquid alkaline absorbents are carbonate, bicarbonate and/or phosphate solutions and more preferably the aqueous solution is a buffered solution further comprising sodium carbonate and sodium bicarbonate or potassium carbonate and potassium bicarbonate or their mixtures. The pH of the liquid aqueous alkaline solution is preferably in the range of from 7 to 10, more preferably of from 7.5 to 9.5. It will be appreciated that in downward direction of the column, the pH of the absorption liquid will decrease due to absorption of acidic compounds from the gas stream, in particular hydrogen sulphide and some carbon dioxide. The pH of the loaded aqueous solution obtained in step (a) will be typically lower than the pH of the aqueous solution provided to the absorption column. The pH of the loaded aqueous solution obtained in step (a) may be as low as 6.5 and is preferably in the range of from 6.5 to 9.0.

The temperature in step (a) is found to be very critical and is between 35 and 48 °C and preferably between 40 and 45 °C. At lower temperatures the selectivity for the absorption of hydrogen sulphide relative to carbon dioxide is less and at temperatures higher than 48 °C the process becomes less stable. The pressure in step (a) may be in the range of from 0 bara to 100 bara, preferably of from atmospheric pressure to 80 bara.

The anaerobic conditions in step (a) and optional step (a1) are suitably achieved by performing the step in the absence of molecular oxygen, preferably also in the absence of other oxidants such as for example nitrate. By 'in the absence of molecular oxygen' is meant that the concentration of molecular oxygen in the aqueous solution in step (a) is at most 10 µM molecular oxygen, preferably at most 1 µM, more preferably at most 0.1 µM molecular oxygen.

The sulphide-oxidising bacteria as present in step (a) may be any sulphide-oxidising bacteria, preferably sulphide-oxidising bacteria of the genera *Halothiobacillus*, *Thioalkalimicrobium*, *Thioalkalispira, Thioalkalibacter*, *Thioalkalivibrio, Alkalilimnicola,* and related bacteria. The sulphide-oxidising bacteria as present in step (a) are comprised of the regenerated sulphide-oxidising bacteria as obtained in step (b). It has been found that when such regenerated sulphide-oxidising bacteria are present in the aqueous alkaline solution under the anaerobic conditions and temperature range a very effective absorption of hydrogen sulphide results. The content of regenerated sulphide-oxidising bacteria, based on nitrogen content, in the aqueous alkaline solution in step (a) is preferably greater than 5 mg N/L and lower than 1000 mg N / L and more preferably between 40 and 200 mg N/L.

The loaded aqueous solution as obtained in step (a) comprises dissolved bisulphide, elemental sulphur as produced by the sulphide-oxidising bacteria in step (a) and sulphide oxidising bacteria loaded with a bisulphide compound. The combined concentration of bisulphide and the optional elemental sulphur in the loaded aqueous solution obtained in step (a) (expressed as sulphur) may be up to 20 grams per litre. Preferably this combined concentration in the loaded aqueous solution is in the range of from 100 mg/L to 15 g/L, more preferably of from 150 mg/L to 10 g/L. The aqueous solution may comprise trace compounds, such as for example iron, copper or zinc, as nutrients for the sulphide-oxidising bacteria.

Suitably the loaded aqueous solution as obtained in step (a) is kept in a step (a1) under anaerobic conditions for at least a time sufficient to lower the concentration of dissolved bisulphide to below 5mM. The residence time of the sulphide-oxidising bacteria in step (a1) is preferably at least 3 minutes, more preferably at least 5 minutes, more preferably at least 10 minutes. The maximum residence time is not critical, but for practical reasons, the residence time is preferably at most 2 hours, more preferably at most 1 hour. Step (a1) may be suitably be performed in a first bioreactor. The temperature in step (a1) may be lower or higher than the temperature in step (a). However it is preferred to avoid any on-purpose cooling or heating of the loaded aqueous solution of step (a) and therefore the temperature in step (a1) will be between 35 and 45 °C. The pressure in step (a1) may range from 0 bara to 100 bara, more preferably of from atmospheric pressure to 80 bara. The pressure in step (a) and step (a1) are suitably the same or substantially in the same order of magnitude. The pH in step (a1) is suitably between 7 and 10, more preferably between 7.5 and 9.5.

In step (a) and optional step (a1) suitably more than 80 mol%, preferably more than 90 mol% and even more preferably more than 95 mol% of the dissolved bisulphide is removed from the aqueous solution by biological remediation by the sulphide-oxidising bacteria. In step (a) and optional step (a1) elemental sulphur is formed by selective oxidation of bisulphide, probably via polysulphide as intermediate product, to elemental sulphur. The loaded aqueous solution of step (a) and/or the solution obtained in step (a1) may be directly supplied to step (b) for regeneration of the sulphide-oxidising bacteria, i.e. to bring the bacteria in an oxidised state. By directly supplied is here meant that no intermediate process step is performed with the object to remove elemental sulphur and/or sulphide-oxidising bacteria from the first liquid effluent. Optionally elemental sulphur may be removed from these aqueous solutions. In such a step some of the sulphide-oxidising bacteria may also be removed. However it is preferred to avoid the loss of sulphide-oxidising bacteria in such a step and ensure that the majority of these bacteria are provided to step (b).

Preferably, the aqueous solution obtained in step (a) or optional step (a1) as provided to step (b) comprises less than 5mM dissolved bisulphide, more preferably is essentially free of dissolved bisulphide. The low content of dissolved bisulphide is advantageous to avoid the sulphate formation under the aerobic conditions of step (b). It is further believed that the low bisulphide content avoids the growth of the bacteria population which seem to be responsible for the formation of sulphate in either step (a) or (b) and avoids the chemical oxidation to thiosulphate.

In step (b) the loaded aqueous solution of step (a) and/or optional step (a1) is contacted with an oxidant to regenerate the sulphide-oxidising bacteria to obtain a liquid effluent comprising regenerated sulphide-oxidising bacteria. Any suitable oxidant may be used, for example nitrate or molecular oxygen, preferably molecular oxygen. The oxidant may be supplied in any suitable way, preferably by supplying a gaseous stream comprising molecular oxygen to a second bioreactor. The gaseous stream comprising molecular oxygen may be any suitable gas comprising oxygen, preferably air. Preferably, the amount of oxidant supplied to the second bioreactor is at least about the stoichiometric amount needed for oxidation of the sulphide in step (a) and optional step (a1) into elemental sulphur. Even if an amount of oxidant is above the above referred to stoichiometric amount the formation of large amounts of undesired sulphur compounds such as sulphate and thiosulphate is not to be expected due to the very low content of dissolved bisulphide in step (b).

Preferably the temperature in step (b) is in the range of from 10 to 48 °C, more preferably of from 35 to 45 °C and the pressure is between 0 bara and 10 bara, more preferably from atmospheric pressure to 5 bara, even more preferably at atmospheric pressure.

The elemental sulphur may be separated from the loaded aqueous solution while performing step (a) and/or step (a1) and/or after performing step (a) and before performing step (b). Preferably the elemental sulphur as formed in step (a) and in option step (a1) is suitably isolated from the aqueous solution as obtained in step (b). This isolation of elemental sulphur may be performed by any means known in the art, such as for example by means of sedimentation or other means for solid-liquid separation. Preferably elemental sulphur is recovered by taking part of the aqueous solution obtained in step (b) and isolating elemental sulphur from that part to obtain a sulphur-depleted effluent. Part of the sulphur depleted effluent may be recycled to step (b) and part of the sulphur depleted effluent may be purged.

Although the formation of undesired higher oxidised sulphur compounds such as sulphate and thiosulphate are importantly reduced compared to prior art biological sulphide oxidation processes, some higher oxidised sulphur compounds may still be formed, in particular in step (b). In order to avoid undesired built-up of higher oxidised sulphur compounds in a continuously operated process, part of the liquid effluent of step (b) or part of the sulphur-depleted effluent is purged, for example as described above. Such a purge stream, also referred to as a bleed stream, will preferably be subjected to a membrane separation step in order to separate regenerated sulphide oxidising bacteria from the bleed stream. In the membrane separation a retentate stream comprising sulphide-oxidising bacteria and a permeate stream that is essentially free of sulphide-oxidising bacteria is obtained. The retentate stream is recycled to the process and the permeate stream is purged from the process. In the membrane separation step, any suitable membrane may be used. Preferably, ultra-filtration membranes are used. Because in the process according to the invention the formation of higher oxidised sulphur compounds is very much reduced the purge may be relatively small. Applicants found the above described membrane separation may even be omitted. This because the loss of sulphide-oxidising bacteria via the purge is compensated by the growth of the bacteria population in the process.

In step (b), a liquid effluent is obtained that comprises elemental sulphur and regenerated sulphide-oxidising bacteria. Suitably part of this liquid effluent is used as the aqueous solution in step (a) and part of the liquid effluent as obtained in step (b) is contacted with the loaded aqueous solution in step (a1).

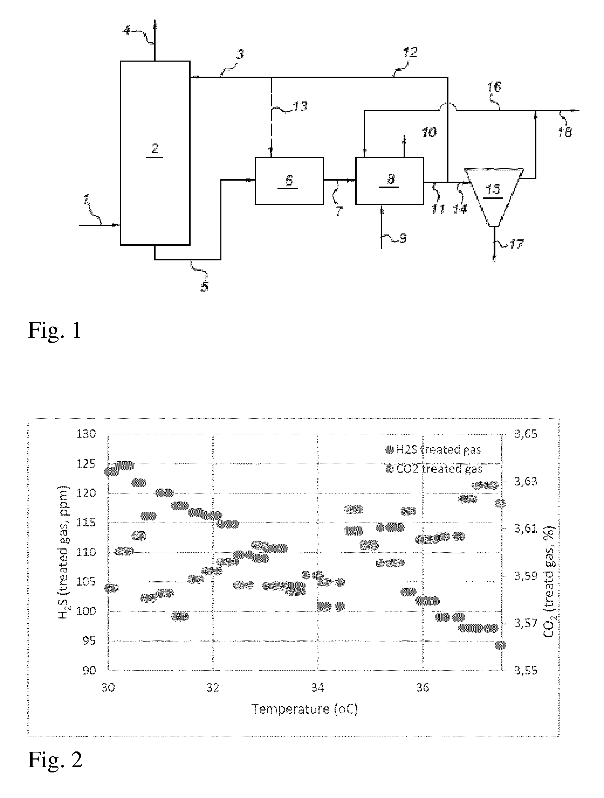

The invention will be illustrated by Figure 1 which shows a process according to the invention. A hydrogen sulphide and carbon dioxide comprising gas is supplied via line 1 to a column 2. To said column 2 also an aqueous alkaline solution further comprising sulphide-oxidising bacteria is supplied via line 3 such that step (a) may be performed in column 2. Via line 5 a loaded aqueous solution comprising bisulphide compounds, sulphide-oxidising bacteria and elemental sulphur is discharged from said column 2 and via line 4 a gas having a lower content of hydrogen sulphide is discharged from said column. In first bioreactor 6 step (a1) is performed wherein the loaded aqueous solution as supplied via line 5 is kept under anaerobic conditions for at least a time sufficient to lower the concentration of dissolved bisulphide to below 5mM. To said first bioreactor 6 an aqueous alkaline solution further comprising sulphide-oxidising bacteria is supplied via line 13. In second bioreactor 8 the loaded aqueous solution as discharged from bioreactor 6 via line 7 is contacted with an oxidant as supplied via line 9 to regenerate the sulphide-oxidising bacteria by performing step (b) such to obtain a liquid effluent comprising regenerated sulphide-oxidising bacteria in line 11. Part of this effluent is supplied to column 2 via line 12 and 3, part of this effluent is directly supplied to first bioreactor 6 and part is supplied to separator 15 wherein precipitated solid elemental sulphur is separated from the effluent to obtain a sulphur-depleted effluent which is recycled to second bioreactor 8 via line 16 and solid elemental sulphur which is withdrawn from the process via line 17. Part of the sulphur-depleted effluent is purged from the process via line 18.

### Example 1

A gaseous stream comprising 3 vol% hydrogen sulphide, 7 vol% carbon dioxide and 90 vol% nitrogen was contacted in an absorption column at various temperatures under anaerobic conditions in a process line-up as in Figure 1 with an aqueous buffered solution containing a 0.4 M bicarbonate buffer. The aqueous solution further consisted of 80 mg N / L of a mixture of regenerated sulphide-oxidising bacteria as supplied via line 12 and 3 from second bioreactor 8.

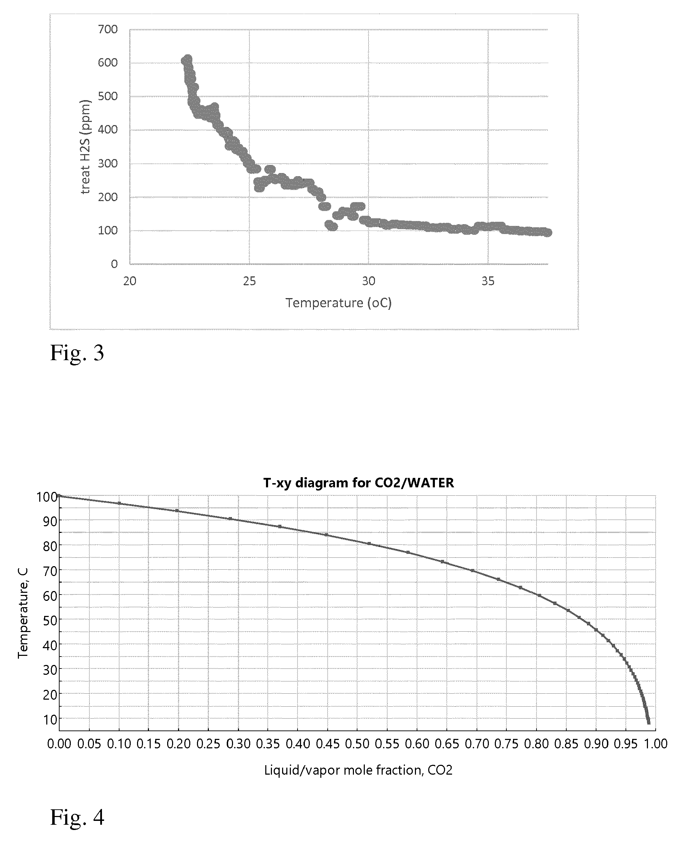

In figure 2 the influence of the temperature in column 2 can be seen on the content of either hydrogen sulphide and carbon dioxide in the treated gas as this is obtained in line 4. The Figure shows that when the temperature is increased the absorption of carbon dioxide decreases and the absorption of hydrogen sulphide increases. The latter is further illustrated in Figure 3.

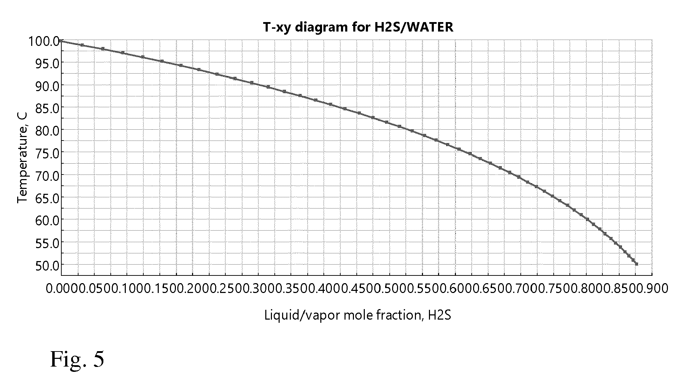

The rate of absorption of carbon dioxide follows what one would expect given its solubility characteristics at different temperatures as illustrated in Figure 4. However rate of absorption of hydrogen sulphide in the above example does not follow what one would expect given its solubility characteristics at different temperatures as illustrated in Figure 5.

## Claims

1. A process to treat a hydrogen sulphide and carbon dioxide comprising gas comprising the following steps:
(a) contacting the hydrogen sulphide and carbon dioxide comprising gas with an aqueous alkaline solution further comprising sulphide-oxidising bacteria under anaerobic conditions and at a temperature of between 35 and 48 °C thereby obtaining a loaded aqueous solution comprising bisulphide compounds, sulphide-oxidising bacteria and elemental sulphur and a gas having a lower content of hydrogen sulphide,
(b) contacting the loaded aqueous solution with an oxidant to regenerate the sulphide-oxidising bacteria to obtain a liquid effluent comprising regenerated sulphide-oxidising bacteria, wherein the sulphide-oxidising bacteria as present in step (a) are comprised of regenerated sulphide-oxidising bacteria obtained in step (b), and
(c) separating elemental sulphur from the loaded aqueous solution of step (a) and/or from the liquid effluent of step (b).

2. A process according to claim 1, wherein the temperature in step (a) is between 40 and 45 °C.

3. A process according to any one of claims 1-2, wherein the volume ratio of carbon dioxide and hydrogen sulphide in the gas is between 1:1 and 1000:1.

4. A process according to claim 3, wherein the volume ratio of carbon dioxide and hydrogen sulphide in the gas is between 5:1 and 200:1.

5. A process according to any one of claims 1-4, wherein the content of regenerated sulphide-oxidising bacteria, based on nitrogen content, in the aqueous alkaline solution in step (a) is greater than 5 mg N / L and lower than 1000 mg N / L.

6. A process according to any one of claims 1-5, wherein after performing step (a) and before performing step (b) the loaded aqueous solution is kept in a step (a1) under anaerobic conditions for at least a time sufficient to lower the concentration of dissolved bisulphide to below 5mM.

7. A process according to claim 6, wherein part of the liquid effluent as obtained in step (b) is used as the aqueous solution in step (a) and part of the liquid effluent as obtained in step (b) is contacted with the loaded aqueous solution in step (a1).

8. A process according to any one of claims 1-7, wherein the concentration of molecular oxygen in the aqueous solution in step (a) and optional step (a1) is at most 1 µM.

9. A process according to any one of claims 1-8, wherein step (a) is performed in a vertical column wherein continuously the hydrogen sulphide comprising gas is fed to the column at a lower position of the column and the an aqueous solution comprising sulphide-oxidising bacteria is continuously fed to a higher position of the column such that a substantially upward flowing gaseous stream contacts a substantially downwards flowing stream.

10. A process according to any one of claims 1-9, wherein the aqueous solution comprising sulphide-oxidising bacteria aqueous solution used in step (a) is a buffered solution comprising sodium carbonate and sodium bicarbonate or potassium carbonate and potassium bicarbonate or their mixtures.

11. A process according to any one of claims 1-10, wherein the oxidant in step (b) is molecular oxygen.

12. A process according to any one of claims 1-11, wherein the process is a continuous process.
